# EUROPÄISCHE PATENTANMELDUNG

(11) **EP 3 141 333 A1**
(43) Veröffentlichungstag der Anmeldung: **15.03.2017**
(21) Anmeldenummer: 16188063.8
(22) Anmeldetag: 09.09.2016
(51) Int. Cl.: B23K 37/06, B23K 9/02

(54) **VORRICHTUNG UND VERFAHREN ZUM FERTIGEN EINER SCHWEISSNAHT**

(30) Priorität: 09.09.2015 DE 102015011497; 06.11.2015 DE 102015014395; 24.03.2016 DE 102016003720
(71) Anmelder: Godow, Burkhard, 26135 Oldenburg (DE); Reymers, Jörn, 27476 Cuxhaven (DE)
(72) Erfinder: Godow, Burkhard, 26135 Oldenburg (DE); Reymers, Jörn, 27476 Cuxhaven (DE)
(74) Vertreter: Siekmann, Gunnar

(57) **Zusammenfassung**

Die Erfindung betrifft eine Vorrichtung zum Verlängern einer Schweißnaht an einem Anfang oder an einem Ende der Schweißnaht, wobei die Vorrichtung mit einem Verlängerungskörper (1) an den Anfang oder an das Ende einer zwischen miteinander zu verbindenden Bauteilen (10, 10') zu fertigenden Schweißnaht ansetzbar ist und mit wenigstens einem der miteinander zu verschweißenden Bauteile verbindbar ist. Der Verlängerungskörper weist eine Schweißnahtausnehmung (3) auf, mit der dieser fluchtend zu der zu fertigenden Schweißnaht ausrichtbar ist. Weiter ist ausgehend von wenigstens einem der Bauteile eine elektrisch leitende Verbindung (8, 8') zu der Schweißnahtausnehmung ausgebildet. Diese Vorrichtung zeichnet sich dadurch aus, dass der Verlängerungskörper magnetisch an wenigstens eines der miteinander zu verschweißenden Bauteile ansetzbar ist, und dass die Schweißnahtausnehmung mit wenigstens einer Austauscheinlage (4) ausgekleidet ist, so dass die Vorrichtung abgesehen von der Austauscheinlage wiederverwendbar ist.

## Beschreibung

Die Erfindung betrifft eine Vorrichtung zum Fertigen einer Schweißnaht, die an einem Anfang oder an einem Ende über miteinander zu verbindende Bauteile hinaus verlängert ist, wobei die Vorrichtung mit einem Verlängerungskörper an den Anfang oder an das Ende einer zwischen den miteinander zu verbindenden Bauteilen zu fertigenden Schweißnaht ansetzbar ist, die Vorrichtung mit wenigstens einem der miteinander zu verschweißenden Bauteile verbindbar ist, der Verlängerungskörper wenigstens eine Schweißnahtausnehmung aufweist, mit der der Verlängerungskörper fluchtend zu der zu fertigenden Schweißnaht ausrichtbar ist, und ausgehend von wenigstens einem der Bauteile eine elektrisch leitende Verbindung zu der Schweißnahtausnehmung ausgebildet ist. Weiterhin betrifft die Erfindung auch ein Verfahren zum Fertigen einer Schweißnaht zwischen den zwei miteinander zu verbindenden Bauteilen.

Aus der DE 20 2013 000 477 U1 ist eine solche Vorrichtung bekannt, die ein erstes Blech und ein zweites Blech aufweist, welche mittels zumindest einem dritten Blech miteinander verbunden sind und einen Verlängerungskörper ausbilden. Das dritte Blech überlappt dabei jeweils einander zugewandte Kanten des ersten Bleches und des zweiten Bleches, welche entsprechend einer zu erzeugenden Schweißnaht zurechtgebogen werden und bei denen das dritte Blech die Verbindung zwischen dem ersten und dem zweiten Blech darstellt. Diese Vorrichtung wird mittels Schweißen an zumindest eines von zwei mit der Schweißnaht miteinander zu verbindenden Bauteilen angeheftet, so dass eine feste Verbindung zwischen der Vorrichtung und dem jeweiligen Bauteil besteht. Nach Anheften jeweils einer Vorrichtung an den Anfang und an das Ende der Schweißnaht kann die Schweißnaht mit Abstand zu den zu verschweißenden Bauteilen angefangen und beendet werden, so dass die Schweißnaht im Bereich zwischen den Bauteilen sauber ausgeführt ist. Die häufig am Anfang oder am Ende einer solchen Schweißnaht auftretenden Ungenauigkeiten in deren Zusammensetzung und Ausführung sind dann nicht Teil des späteren Werkstücks, sondern werden in einem weiteren Arbeitsschritt von dem Werkstück aus den miteinander verschweißten Bauteilen abgetrennt. Hierbei ist es bekannten Vorrichtungen aus dem Stand der Technik gemein, dass jeweils immer die komplette Vorrichtung entsorgt werden muss, was mit relativ hohen Kosten verbunden ist.

Aufgabe der Erfindung ist es eine derartige Vorrichtung und ein entsprechendes Verfahren dahingehend weiter zu entwickeln, dass entsprechende Schweißnähte, insbesondere Schweißnähte beim Unterpulverschweißen, mit geringeren Kosten und weniger Abfall hergestellt werden können.

Die Lösung dieser Aufgabe erfolgt vorrichtungsmäßig mit den Merkmalen des Patentanspruchs 1 und verfahrensmäßig mit den Merkmalen des Patentanspruchs 28. Weiterbildungen und vorteilhafte Ausgestaltungen sind in den jeweils nachgeordneten Patentansprüchen angegeben.

Die Vorrichtung zum Fertigen einer Schweißnaht, die an einem Anfang oder an einem Ende über miteinander zu verbindende Bauteile hinaus verlängert ist, wobei die Vorrichtung mit einem Verlängerungskörper an den Anfang oder an das Ende einer zwischen den miteinander zu verschweißenden Bauteilen zu fertigenden Schweißnaht ansetzbar ist, die Vorrichtung mit wenigstens einem der miteinander zu verschweißenden Bauteile verbindbar ist, der Verlängerungskörper wenigstens eine Schweißnahtausnehmung aufweist, mit der der Verlängerungskörper fluchtend zu der zu fertigenden Schweißnaht ausrichtbar ist, und ausgehend von wenigstens einem der Bauteile eine elektrisch leitende Verbindung zu der Schweißnahtausnehmung ausgebildet ist, zeichnet sich erfindungsgemäß dadurch aus, dass der Verlängerungskörper magnetisch an wenigstens eines der miteinander zu verschweißenden Bauteile ansetzbar ist, und dass die Schweißnahtausnehmung mit wenigstens einer Austauscheinlage ausgekleidet ist, so dass die Vorrichtung abgesehen von der Austauscheinlage wiederverwendbar ist.

Dadurch, dass der Verlängerungskörper beim Schweißen magnetisch an wenigstens einem der zu verschweißenden Bauteile gehalten ist, muss dieser nicht wie im Stand der Technik durch eine weitere Schweißnaht unlösbar an wenigstens einem der Bauteile befestigt sein, sondern kann nach Fertigstellung der Schweißnaht auf einfache Weise von dem Bauteil abgenommen und wiederverwendet werden. Die Austauscheinlage mit dem die Schweißnahtausnehmung des Verlängerungskörpers ausgekleidet ist, insbesondere vollflächig ausgekleidet ist, verhindert dabei mögliche Beschädigungen des restlichen Verlängerungskörpers durch beim Schweißen entstehende Wärme. Diese Austauscheinlage weist nach dem Schweißen eine feste Verbindung zu der Schweißnaht auf und wird nach Fertigstellung der Schweißnaht zusammen mit dem über die Länge der Bauteile hervorstehenden Abschnitt der Schweißnaht verworfen. Mit der Austauscheinlage in der Schweißnahtausnehmung muss nur wenig Material der Vorrichtung nach einmaligem Gebrauch verworfen werden, wobei die restliche Vorrichtung zerstörungsfrei von dem fertigen Werkstück der miteinander verschweißten Bauteile lösbar ist. Dies führt zu einem wesentlich geringeren Materialeinsatz und damit auch geringeren Kosten in Verbindung mit dem Herstellen einer Schweißnaht.

An dem Verlängerungskörper kann dazu auf einfache Weise wenigstens ein Magnethalter angeordnet sein, mit dem der Verlängerungskörper an wenigstens einem der zu verschweißenden Bauteile anordbar ist. Der erfindungsgemäße Magnethalter umfasst dabei einerseits einen entsprechend starken Magneten, der geeignet ist, den Verlängerungskörper während des Schweißens in Position zu dem oder den Bauteilen zu halten und Mittel, die geeignet sind, eine entsprechende Verbindung zwischen Verlängerungskörper und Magnet herzustellen. Ein solches Mittel kann in weiterer Ausgestaltung ein an dem Verlängerungskörper befestigter Schwenkarm sein, an dessen verschwenkbarem Ende der Magnet angeordnet ist. Der Magnethalter ist dann mit Vorteil schwenkbeweglich an dem Verlängerungskörper befestigt und kann an unterschiedliche Bauteilgeometrien der miteinander zu verschweißenden Bauteile angepasst werden. Dieser Schwenkarm kann sich zudem aus mehreren Schwenkarmteilen zusammensetzen, die drehgelenkig miteinander verbunden sind und über Feststellmittel zueinander fixierbar sind. Hierzu kann es weiterhin auch erforderlich sein, dass der Magnethalter teleskopierbar ist.

Indem der Magnethalter wenigstens einen abschaltbaren Magneten aufweist, ist zudem eine einfache Montage der Vorrichtung an dem Bauteil oder den Bauteilen ermöglicht, bei der der Verlängerungskörper zuerst zu dem Bauteil oder zu den Bauteilen und zu der zu fertigen Schweißnaht ausgerichtet wird und der abschaltbare Magnet erst nach dem Ausrichten des Verlängerungskörpers aktiviert wird und die Vorrichtung erst nach der Aktivierung magnetisch an dem Bauteil oder den Bauteilen in der vorbestimmten Position zu der zu fertigenden Schweißnaht gehalten ist.

In weiterer Ausgestaltung des Magnethalters kann die elektrisch leitende Verbindung zwischen Bauteil und Schweißnahtausnehmung des Verlängerungskörpers in den Magnethalter integriert sein, so dass die elektrisch leitende Verbindung zwischen Bauteil und Verlängerungskörper in dem Magnethalter ausgebildet ist.

Ein besonders sicherer Halt des Verlängerungskörpers oder der Vorrichtung an den zu verschweißenden Bauteilen kann dadurch erreicht werden, dass der Verlängerungskörper magnetisch an beiden miteinander zu verschweißenden Bauteilen anordbar ist. Vorzugsweise weist die Vorrichtung dazu dann zwei einzelne Magnethalter auf, von denen ein erster Magnethalter einem ersten zu verschweißenden Bauteil und ein zweiter Magnethalter einem zweiten zu verschweißenden Bauteil zugeordnet ist. Die Vorrichtung ist dann mit Vorteil an beiden miteinander zu verschweißenden Bauteilen befestigt.

Um eine Anpassung an gekrümmte Bauteiloberflächen zu ermöglichen können je Magnethalter auch mehr als ein Magnet vorgesehen sein, deren Auflageflächen zudem in unterschiedlichen Winkeln zueinander anstellbar sind.

Gemäß einer alternativen Ausgestaltung kann die elektrisch leitende Verbindung zwischen dem Bauteil und der Schweißnahtausnehmung des Verlängerungskörpers auch über wenigstens eine separate Leitung erfolgen. Diese Leitung kann beispielsweise durch ein Kabel gebildet sein, welches an seinem dem jeweiligen Bauteil zugeordneten Ende ebenso wie die Magnethalter magnetisch an wenigstens einem der zu verschweißenden Bauteile ansetzbar ist. Insbesondere auch über wenigstens einen abschaltbaren Magnet an wenigstens einem der zu verschweißenden Bauteile ansetzbar ist. Andere Ausführungen können auch geklemmt oder anderweitig befestigbar sein.

Die Austauscheinlage besteht nach einer Weiterbildung wenigstens abschnittsweise aus einem elektrisch leitenden Material, um an der Schweißnahtausnehmung eine elektrisch leitende Verbindung zum jeweiligen Bauteil zu ermöglichen, wobei die Verbindung zu dem Bauteil über die elektrisch leitende Verbindung zwischen wenigstens einem der Bauteile und der Schweißnahtausnehmung erfolgt, welche als separate Leitung oder in den Magnethalter integriert vorliegen kann.

In weiterer Ausgestaltung umfasst die Austauscheinlage zwei Flankenbleche, die einander gegenüberliegend die Schweißnahtausnehmung zu zwei Seiten in Längsrichtung der Schweißnaht begrenzen. Entsprechende Flankenbleche sind einfach zu fertigen und daher besonders kostengünstig herzustellen.

Vorteilhafterweise erstrecken sich die Schweißnahtausnehmung und die Flankenbleche, wie insbesondere auch die gesamte Austauscheinlage, dabei über die gesamte Länge des Verlängerungskörpers, wobei die Schweißnahtausnehmung zu zwei einander gegenüberliegenden Seiten des Verlängerungskörpers hin offen ist und der Verlängerungskörper, insbesondere mit einer oder auch mit beiden offenen Seiten der Schweißnahtausnehmung, an ein oder mehrere Bauteile ansetzbar ist.

Weiterhin kann die Austauscheinlage ergänzend zu den zwei Flankenblechen auch ein Wurzelblech aufweisen, welches in einem Bodenbereich einen zwischen den Flankenblechen bestehenden Abstand zum Verlängerungskörper begrenzt. Je nach Ausführung können die Flankenbleche und das Wurzelblech einteilig oder mehrteilig ausgeführt sein, wobei die Austauscheinlage insgesamt in bevorzugter Ausgestaltung ein V-, X-, U-, K-, Kehlnaht- oder Tulpen-Profil bildet und bei mehrteiliger Ausführung aus laserschneidbaren Teilen, wie Flankenblech und Wurzelblech, besteht oder bei einteiliger Ausführung durch Pressformen aus einem Teil gefertigt ist.

Da eine Stromversorgung der zu verschweißenden Bauteile und der Schweißnahtausnehmung mit der Austauscheinlage insbesondere für eine erste Zündung bei Erstellen einer ersten Schicht der Schweißnaht entscheidend ist, muss in weiterer Ausgestaltung zumindest das Wurzelblech aus einem elektrisch leitenden Material bestehen und mit einem Ende der elektrisch leitenden Verbindung zu wenigstens einem der miteinander zu verschweißenden Bauteile in Kontakt stehen. Die restlichen Bereiche oder Teile der Austauscheinlage müssen nicht zwingend elektrisch leitend sein, so dass hier auch andere nicht elektrisch leitende Materialien ausgewählt werden können.

Nach einer Weiterbildung kann die ein- oder mehrteilige Austauscheinlage magnetisch in der Schweißnahtausnehmung in Position gehalten sein. Der Verlängerungskörper kann hierzu entsprechende, innenseitig an der Schweißnaht-ausnehmung angeordnete Magnete aufweisen, die einer beim Schweißen auftretenden Schrumpfung der Austauscheinlage und einer damit einhergehenden Positionsveränderung der Austauscheinlage entgegenwirken. Eine weitere Möglichkeit die Austauscheinlage in der Schweißnahtausnehmung zu fixieren kann darin bestehen, dieses in der Schweißnahtausnehmung zu verklemmen, insbesondere durch vorsehen von Halteklammern, die an das Austauschprofil angreifen.

Alternativ oder ergänzend zu Halteklammern kann eine Verklemmung der Austauscheinlage auch dadurch erfolgen, dass an dieser Nasen ausgebildet sind, die aus der Schweißnahtausnehmung gegenüber dem Verlängerungskörper hervorstehen und mit wenigstens einem Haken aufweisenden, an dem Verlängerungskörper gehaltenen Schieberiegel in Eingriff bringbar sind. Die Verklemmung der Austauscheinlage, insbesondere der Flankenbleche der Austauschanlage, an denen die Nasen in weiterer Ausgestaltung ausgebildet sind, erfolgt dann auf einfache Weise durch Verschieben des Schieberiegels. Der Schieberiegel wird dabei vorzugsweise in Längserstreckung der Schweißnaht verschoben.

Um die Austauscheinlage bzw. Flankenbleche der Austauschanlage beidseitig an den jeweiligen Flanken der Schweißnahtausnehmung zu fixieren, ist in weiterer Ausgestaltung jeder Flanke der Schweißnahtausnehmung wenigstens ein Schieberiegel zugeordnet. Diese sind vorteilhafterweise in Langlöchern geführt, welche eine Verschiebung wenigstens um die Breite der Nasen in Längserstreckung der Schweißnaht ermöglichen. Bevorzugt sind jeder Flanke der Schweißnahtausnehmung wenigstens zwei hervorstehende Nasen zugeordnet und jeder Nase wiederum ein Haken der Schieberiegel. Die Haken bilden dabei einen zu der zu erstellenden Schweißnaht hin offenen Hinterschnitt aus und umschließen die Nasen zu wenigstens drei Seiten. Um die Haken in einer der Nasen umschließenden Position festzusetzen, kann den Schieberiegeln jeweils wenigstens ein Feststellmechanismus zugeordnet sein.

Bei einer durchgehenden, das heißt zu zwei einander gegenüberliegenden Seiten des Verlängerungskörpers offenen, Schweißnahtausnehmung kann zudem an der nicht zur Anlage an die zu verschweißenden Bauteile vorgesehenen Seite des Verlängerungskörpers eine Verriegelung, beispielsweise in Form von Verriegelungs-stiften, die in den freien Querschnitt der Schweißnahtausnehmung ragen, erforderlich sein, um eine Verschiebung der Austauscheinlage in Längsrichtung der Schweißnahtausnehmung zu unterbinden.

Anstelle von Verriegelungsstiften kann gemäß einer alternativen Ausführung auch ein einziger, einteiliger Riegel vorgesehen sein, um eine Verschiebung der Austauscheinlage in Längsrichtung zu vermeiden. Dieser Riegel ist dann beidseitig zu den Flanken an dem Verlängerungskörper befestigt, so dass die Austauscheinlage mit ihrem dem Riegel zugewandten Endseitenabschnitt zumindest abschnittsweise an dem Riegel anliegt oder an den Riegel anstößt. Indem der Riegel einen an den freien Querschnitt der Schweißnahtausnehmung angepassten Mittelteil aufweist, kann zudem ein Zusammenziehen der Austauscheinlage während des Schweißens unterbunden werden. An diesem Mittelteil liegt die Austauscheinlage dann mit wenigstens einem Innenseitenabschnitt an, der über den Endseitenabschnitt der an den Riegel anstößt und über den Verlängerungskörper hinausragt. Insbesondere liegt dann jedes Flankenblech mit jeweils einem Innenseitenabschnitt und einem Endseitenabschnitt an dem Riegel an.

Um Beschädigungen des Verlängerungskörpers während des Schweißvorgangs zu vermeiden, ist vorgesehen, dass die Austauscheinlage eine Dicke aufweist, die größer ist als die Schmelztiefe während des Schweißens, insbesondere, dass die Austauscheinlage eine Dicke von mindestens 2 mm aufweist, insbesondere, dass die Austauscheinlage eine Dicke von mindestens 5 mm aufweist.

Der Verlängerungskörper selbst ist nach einer Weiterbildung metallisch, insbesondere besteht der Verlängerungskörper aus einem Block aus Aluminium, insbesondere einen quaderförmigen Block aus Aluminium. In diesem Block aus Aluminium können dann die Schweißnahtausnehmung sowie Anschlüsse für Magnet-halter und elektrisch leitende Verbindungen eingearbeitet sein. Grundsätzlich geeignet sind aber auch keramische Werkstoffe, sofern in diesen eine zur Schweißnahtausnehmung führende elektrisch leitende Verbindung vorgesehen ist, so dass zumindest die Austauscheinlage oder ein elektrisch leitender Abschnitt der Austauscheinlage mit Strom versorgbar und wenigstens einem der zu verschweißenden Bauteile verbindbar ist.

Gemäß einer anderen Ausführung kann der Verlängerungskörper mehr als eine Schweißnahtausnehmung aufweisen, insbesondere zwei Schweißnahtausnehmungen aufweisen. Die Schweißnahtausnehmungen sind dann bevorzugt an einander gegenüberliegenden Seiten, insbesondere einer Oberseite und einer Unterseite, des Verlängerungskörpers angeordnet und parallel zueinander ausgerichtet.

In weiterer Ausgestaltung können die Schweißnahtausnehmungen auch unterschiedliche Geometrien, das heißt unterschiedliche Formen oder unterschiedliche Größen oder unterschiedliche Formen und Größen aufweisen. Diese unterschiedlichen Geometrien der Schweißnahtausnehmungen werden häufig benötigt, um besonders dicke Bauteile miteinander zu verschweißen, wobei eine Schweißnaht dann in zwei Schritten beidseitig gefertigt wird. Zuerst wird ein erster, zumeist innerer Teil der Schweißnaht gesetzt und anschließend ein zweiter, zumeist äußerer Teil der Schweißnaht gefertigt. Die Bezeichnungen innerer Teil der Schweißnaht und äußerer Teil der Schweißnaht beziehen sich dabei auf deren spätere Position an oder in dem zusammengeschweißten Bauteil, beispielsweise einem Rohr. Zumeist ist der erste oder innere Teil der Schweißnaht dabei dicker als der zweite oder äußere Teil der Schweißnaht. Auch für dicke Bauteile, bei denen sich die Schweißnaht aus einem ersten Teil und einem zweiten Teil mit unterschiedlicher Geometrie zusammensetzt, wird dann nur noch eine Vorrichtung benötigt, die nach Fertigstellung des beispielsweise ersten oder inneren Teiles der Schweißnaht auf einfache Weise umgesetzt wird, um den zweiten oder äußeren Teil der Schweißnaht zu fertigen.

Der Verlängerungskörper, insbesondere der den Verlängerungskörper bildende Block, weist dabei nach einer Weiterbildung eine Dicke auf, die wenigstens um die Tiefe der zweiten Schweißnahtausnehmung gegenüber einem Verlängerungskörper mit nur einer Schweißnahtausnehmung verdickt ist. Weiter kann ein Verlängerungskörper mit zwei Schweißnahtausnehmungen zusätzlich an allen Seiten, insbesondere den beiden einander gegenüberliegenden Seiten, mit Schweißnahtausnehmungen jeweils Bohrungen oder dergleichen aufweisen. In den Bohrungen sind dann die Magnethalter an dem Verlängerungskörper befestigbar, so dass die Magnethalter nicht doppelt benötigt werden, sondern entsprechend umsetzbar sind. Die Stromzuführung über die elektrisch leitende Verbindung kann entweder je Schweißnahtausnehmung getrennt erfolgen, wobei die Kabel oder dergleichen auf ähnliche Weise umsetzbar sein können wie die Magnethalter oder über eine gemeinsame, sich vor den Schweißnahtausnehmungen verzweigende Leitung erfolgen.

Weiter kann an der nicht zur Anlage an die zu verschweißenden Bauteile vorgesehenen Seite des Verlängerungskörpers in Verlängerung der Schweißnaht-ausnehmung eine Schlackeauffangeinheit anordbar sein. In der Schlackeauffangeinheit können nach Fertigstellung einer Schicht der zu erstellenden Schweißnaht anfallende Reste an Schlacke und nicht verbranntem Pulver aufgefangen und gesammelt werden, so dass diese nicht mehr aufgefegt werden müssen. Die Schlackeauffangeinheit ist dabei vorteilhafterweise durch einen Behälter gebildet, der mit einem Sieb in einen Schlackesammelbereich und einen Pulversammelbereich unterteilt ist. Das von der Schlacke getrennt gesammelte Pulver kann so einfach bei weiteren Schweißungen wiederverwendet werden. In weiterer Ausgestaltung kann das Sieb geneigt angeordnet sein und dem Pulversammelbereich eine verschließbare Öffnung zugeordnet sein, die ein getrenntes Entleeren des Pulversammelbereichs ermöglicht.

Weiter betrifft die Erfindung auch ein Verfahren zum Fertigen einer Schweißnaht zwischen zwei miteinander zu verbindenden Bauteilen, bei dem die Schweißnaht unter Verwendung einer oben beschriebenen Vorrichtung an einem Anfang oder einem Ende oder einem Anfang und einem Ende über die miteinander zu verbindenden Bauteile hinaus verlängert wird. Durch Verwendung der Vorrichtung ist dabei erreicht, dass je Schweißvorgang insgesamt weniger Material verbraucht wird und damit geringere Kosten für jede Schweißnaht verbunden sind. Im Einzelnen zeichnet sich das Verfahren dadurch aus, dass der Verlängerungskörper der Vorrichtung an den Anfang oder an das Ende oder jeweils ein Verlängerungskörper an den Anfang und ein Verlängerungskörper an das Ende einer zwischen miteinander zu verbindenden Bauteilen zu fertigenden Schweißnaht magnetisch angesetzt wird, die Schweißnaht bei angesetztem Verlängerungskörper oder angesetzten Verlängerungskörpern gefertigt wird und der Verlängerungskörper oder die Verlängerungskörper nach Fertigung der Schweißnaht zerstörungsfrei von den miteinander verschweißten Bauteilen gelöst werden. Abgesehen von einer in der Schweißnahtausnehmung des Verlängerungskörpers anzuordnenden Austauscheinlage, die mit der Schweißnaht eine feste Verbindung eingeht, werden so keine Materialien verbraucht und der Verlängerungskörper kann für weitere Schweißungen wieder verwendet werden.

Ein Ausführungsbeispiel der Erfindung ist in der Zeichnung dargestellt. Es zeigen:
- Fig. 1:: eine perspektivische Darstellung einer ersten Ausführung der Vorrichtung;
- Fig. 2:: eine Seitenansicht der Vorrichtung gemäß Fig. 1;
- Fig. 3:: eine Draufsicht auf die Vorrichtung gemäß Fig. 1 und Fig. 2;
- Fig. 4:: die an zwei miteinander zu verschweißende Bauteile angesetzte Vorrichtung gemäß Fig. 1 bis Fig. 3;
- Fig. 5:: eine Seitenansicht einer zweiten Ausführung der Vorrichtung;
- Fig. 6:: eine Draufsicht auf die zweite Ausführung der Vorrichtung gemäß Fig. 5;
- Fig. 7:: eine perspektivische Darstellung einer dritten Ausführung der Vorrichtung;
- Fig. 8:: eine perspektivische Darstellung einer Ausführungsform eines Flankenblechs gemäß der dritten Ausführung der Vorrichtung gemäß Fig. 7;
- Fig. 9:: Drauf- und Seitenansichten eines Schieberiegels entsprechend Fig. 7; und
- Fig. 10:: eine perspektivische Darstellung einer Schlackeauffangeinheit.

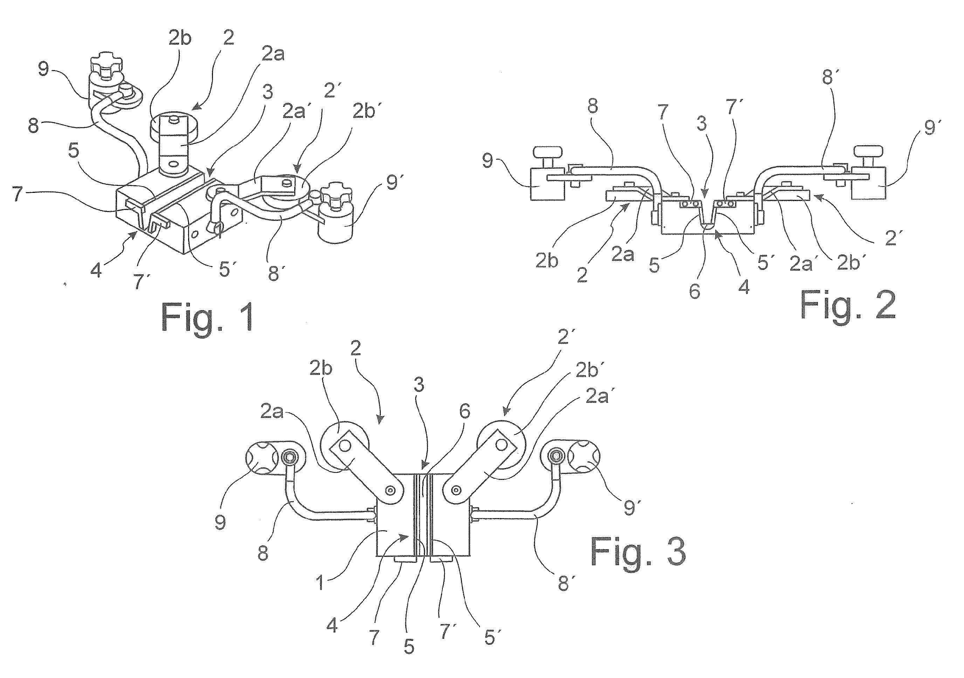

In Fig. 1 ist die Vorrichtung mit dem Verlängerungskörper 1 aufgezeigt, wobei an dem Verlängerungskörper 1 zwei Magnethalter 2, 2' schwenkbeweglich befestigt sind. Der Verlängerungskörper 1 selbst ist durch einen quaderförmigen Aluminiumblock gebildet, in welchem eine Schweißnahtausnehmung 3 eingeformt ist, die in ihrer Geometrie an eine jeweils zu fertigende Schweißnaht angepasst ist. Die Schweißnahtausnehmung 3 erstreckt sich von einer zur Anlage an die miteinander zu verschweißenden Bauteile vorgesehenen ersten Seite bis zu einer dieser Seite gegenüberliegenden zweiten Seite des Verlängerungskörpers 1 und ist zu beiden Seiten hin offen. In der Schweißnahtausnehmung 3 ist eine Austauscheinlage 4 angeordnet, die aus zwei Flankenblechen 5, 5' sowie einem Wurzelblech 6 zusammengesetzt ist, die die Schweißnahtausnehmung 3 zum Verlängerungskörper 1 hin vollständig auskleiden. Während das Wurzelblech 6 in einem Bodenbereich der Schweißnahtausnehmung 3 angeordnet ist, sind die beiden Flankenbleche 5, 5' einander gegenüberliegenden Seitenwänden der Schweißnahtausnehmung 3 zugeordnet. An dem nicht zur Anlage an miteinander zu verschweißende Bauteile vorgesehenen offenen Ende der Schweißnahtausnehmung 3 sind an der zweiten Seite des Verlängerungskörpers 1 Verriegelungsstifte an den Verlängerungskörper 1 außenseitig angesetzt, die mit jeweils einem Ende in den freien Querschnitt der Schweißnahtausnehmung 3 ragen und so die Flankenbleche 5, 5' gegen ein Verrutschen in Längsrichtung der Schweißnahtausnehmung 3 sichern. Die Magnethalter 2, 2' sind jeweils an der Oberseite des Verlängerungskörpers 1 seitlich zu der mittig an der Oberseite angeordneten Schweißnahtausnehmung 3 angeordnet.

An den jeweils parallel zur Schweißnahtausnehmung 3 verlaufenden Seiten des Verlängerungskörpers 1 sind jeweils elektrisch leitende Verbindungen 8, 8' angeschlossen, welche innerhalb des quaderförmigen Verlängerungskörpers 1 bis zur Schweißnahtausnehmung 3 fortgeführt sind und mit einem ersten Ende an der Schweißnahtausnehmung 3 enden. Das jeweils zweite Ende der elektrisch leitenden Verbindung ist über Massemagnete 9, 9' an jeweils eines der miteinander zu verschweißenden Bauteile ansetzbar.

Die in Fig. 2 gezeigte Seitenansicht verdeutlicht insbesondere die Form der Schweißnahtausnehmung 3, welche im Querschnitt bevorzugt V- bis U-förmig sein kann, und wie die Flankenbleche 5, 5' und das Wurzelblech 6 als Austauscheinlage 4 die Schweißnahtausnehmung 3 zum Verlängerungskörper 1 hin auskleiden. Zudem ist besonders gut zu erkennen, dass die Verriegelungsstifte 7, 7' zusammen mit den jeweiligen Flankenblechen 5, 5' fluchtend enden.

Die Draufsicht gemäß Fig. 3 verdeutlicht zudem die Anordnung der schwenkbaren Magnethalter 2, 2' und der Massemagneten 9, 9', welche ausgehend von der Schweißnaht mit größerem Abstand als die Magnethalter 2, 2' an den miteinander zu verschweißenden Bauteilen 10, 10' ansetzbar sind. Jeder Magnethalter 2, 2' umfasst dabei einen Schwenkarm 2a, 2a', der mit einem ersten Ende schwenkbeweglich auf die Oberseite des Verlängerungskörpers 1 aufgesetzt ist und an seinem zweiten Ende einen Haltemagnet 2b, 2b' aufweist.

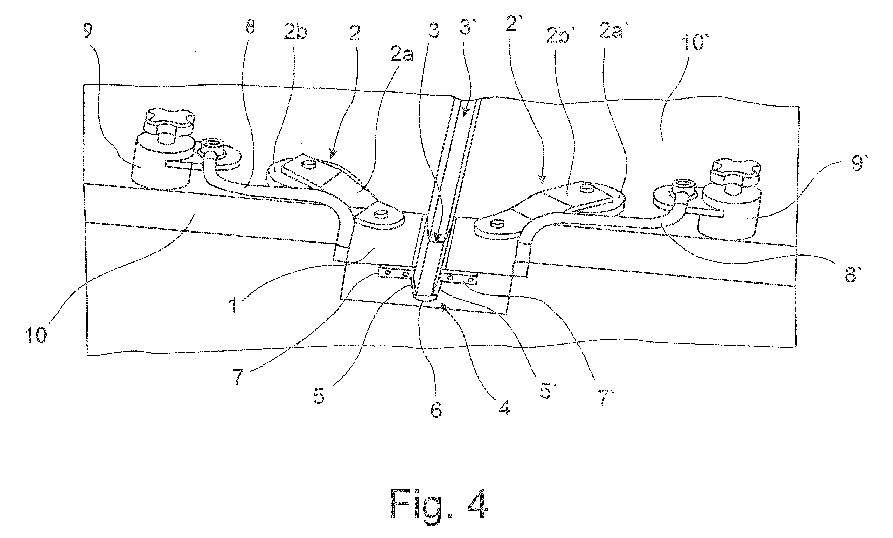

In Fig. 4 ist die Vorrichtung schließlich an zwei miteinander zu verschweißende Bauteile 10, 10' angesetzt, wobei ein erster Magnethalter 2 und ein erster Massemagnet 9 an dem ersten Bauteil 10 und der zweite Magnethalter 2' und der zweite Massemagnet 9' an dem zweiten Bauteil 10' angesetzt sind, so dass die Vorrichtung an beiden Bauteilen 10, 10' befestigt ist. Zwischen den Bauteilen 10, 10' ist eine Schweißnahtausnehmung 3' ausgebildet, welche in ihrer Geometrie der Schweißnahtausnehmung 3 des Verlängerungskörpers 1 entspricht und wobei beide Schweißnahtausnehmungen 3, 3' zueinander fluchtend ausgerichtet sind. Die zu fertigende Schweißnaht kann jetzt durch Ansetzen eines Schweißroboters im Bereich der Schweißnahtausnehmung 3 des Verlängerungskörpers 1 begonnen und in mehreren, aufeinander folgend aufgebrachten Schichten fertiggestellt werden. Dabei ist sowohl dem Anfang als auch dem Ende der Schweißnahtausnehmung 3 jeweils eine Vorrichtung zugeordnet. Der Schweißvorgang beginnt dann im Bereich der Schweißnahtausnehmung 3 des an den Anfang angesetzten Verlängerungskörpers 1 mit einer ersten Schicht und wird bis zu dem Ende mit der weiteren Vorrichtung geführt. Anschließend wird eine weitere Schicht auf die erste Schicht der Schweißnaht aufgebracht. Diese Schritte werden so oft wiederholt, bis die komplette Schweißnahtausnehmung 3, 3' durch die Schweißnaht ausgefüllt ist. Nach Fertigstellung der Schweißnaht werden die Massemagnete 9, 9' und die Magnethalter 2, 2' von den miteinander verschweißten Bauteilen 10, 10' gelöst und der Verlängerungskörper 1 abgenommen. Dabei verbleibt die mit der Schweißnaht verschmolzene Austauscheinlage 4 aus Flankenblechen 5, 5' und Wurzelblech 6 an der Schweißnaht, und wird in einem weiteren Arbeitsschritt zusammen mit dem über die Bauteile 10, 10' überstehenden Bereich der Schweißnaht abgetrennt und verworfen.

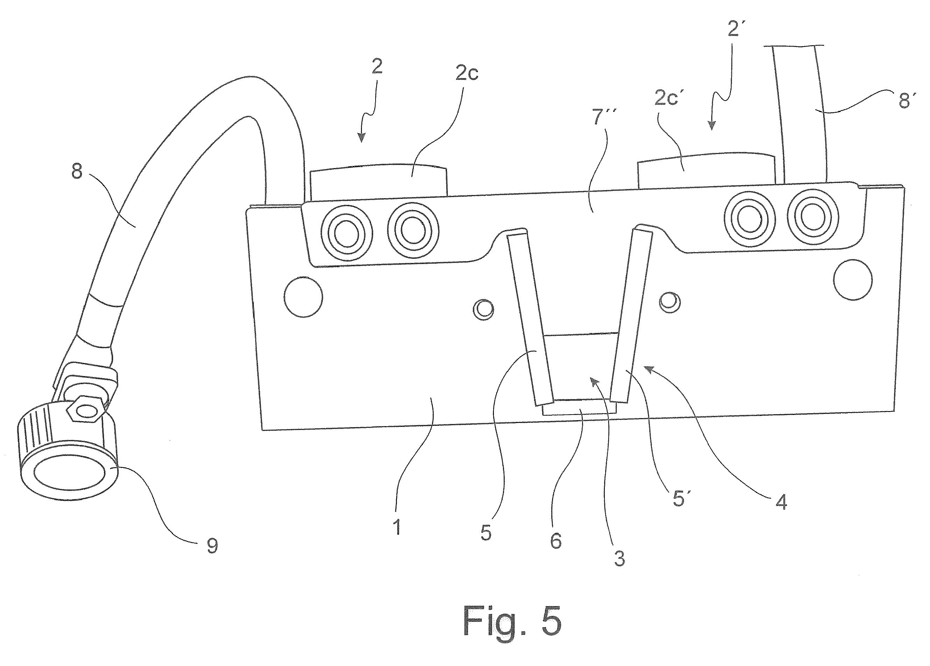

Fig. 5 zeigt eine alternative Ausführung, bei der gleiche Teile mit gleichen Bezugszeichen versehen sind. Diese alternative Ausführung ist gekennzeichnet durch einen Riegel 7", der anstelle der Verriegelungsstifte 7, 7' vorgesehen ist. Dieser Riegel 7" ist einteilig ausgeführt und an gleicher Stelle wie die Verriegelungsstifte 7, 7' an dem Verlängerungskörper 1 befestigt und erstreckt sich zu beiden Flanken der Schweißnahtausnehmung 3, welche mit zwei Flankenblechen 5, 5' ausgekleidet ist. Diese Flankenbleche 5, 5' stoßen einerseits mit einem Endseitenabschnitt in Richtung der Schweißnahtausnehmung 3 gegen den Riegel 7" und liegen mit einem über den Verlängerungskörper 1 und die jeweiligen Endseitenabschnitte verlängerten Bereich jeweils mit einem Innenseitenabschnitt an dem einen an den freien Querschnitt der Schweißnahtausnehmung 3 angepassten Mittelteil des Riegels 7" an, so dass die Flankenbleche 5, 5' während des Schweißvorganges in der vorgesehenen Position verbleiben.

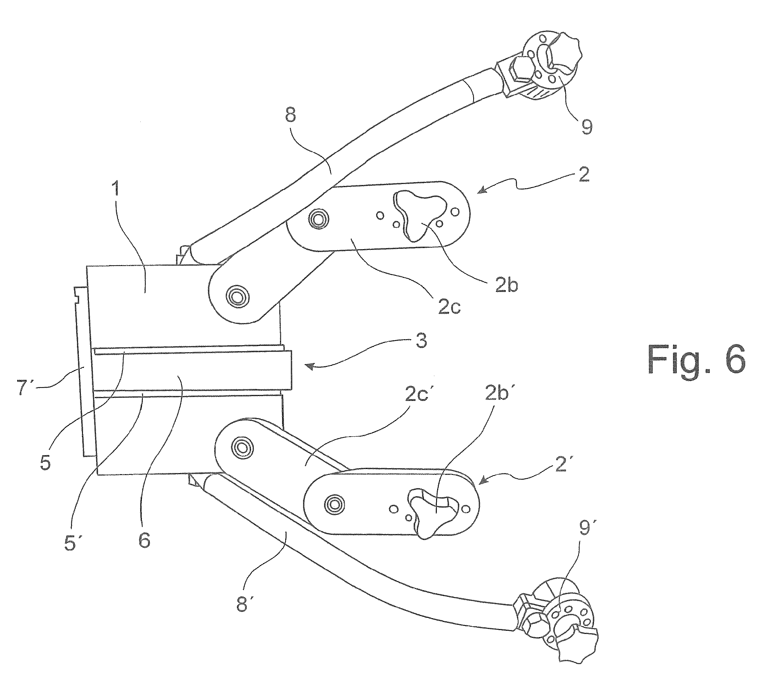

Aus der Draufsicht gemäß Fig. 6 dieser zweiten Ausführung sind zudem veränderte Schwenkarme 2c, 2c' ersichtlich, die aus jeweils gelenkig miteinander verbundenen Schwenkarmteilen zusammengesetzt sind. Zudem sind die Magnethalter 2, 2' ebenso wie die Massemagnete 9, 9' über Drehmechanismen abschaltbar ausgebildet, so dass diese erst nach dem Ausrichten des Verlängerungskörpers 1 zu der zu fertigenden Schweißnaht aktiviert werden können.

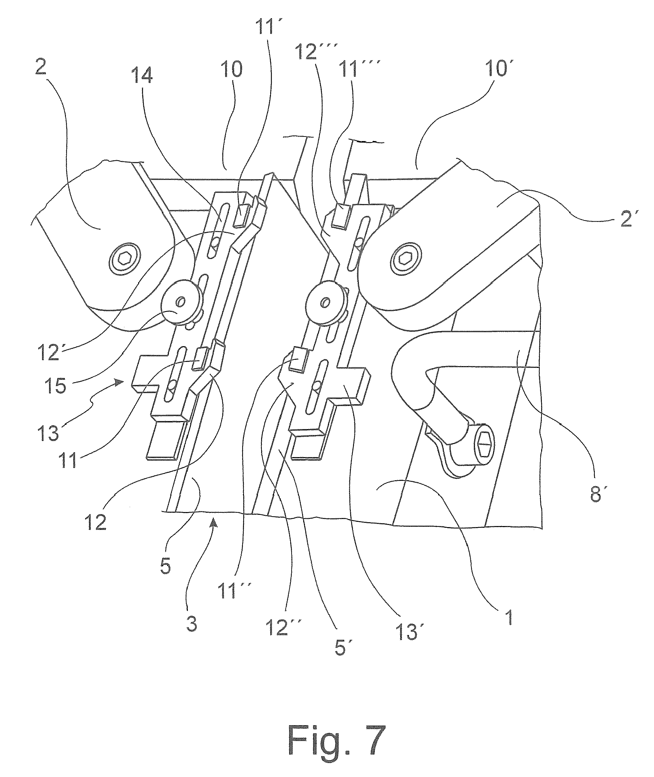

In Figur 7 sind wiederum gleiche Teile mit gleichen Bezugszeichen wie in den vorangegangenen Figuren bezeichnet. Die Ausführung gemäß Figur 6 unterscheidet sich lediglich in der Ausgestaltung der Flankenbleche 5, 5' und deren Verriegelung an dem Verlängerungskörper 1. Dazu sind an den Flankenblechen 5, 5' aus der Schweißnahtausnehmung 3 gegenüber dem Verlängerungskörper 1 hervorstehenden Nasen 11, 11', 11", 11'" ausgebildet, wobei jedem Flankenblech 5, 5' jeweils eine mittige Nase 11, 11', und eine endseitige Nase 11', 11'" an der zur Anlage an die Bauteile 10, 10' bestimmten Seite des Verlängerungskörpers 1 aufweist. Diese Nasen 11, 11', 11", 11'" sind mit Haken 12, 12', 12", 12'" von Schieberiegeln 13, 13' in Eingriff gebracht, wobei jeder Flanke der Schweißnahtausnehmung 3 ein Schieberiegel 13, 13' mit jeweils zwei Haken 12, 12', 12", 12'" zugeordnet ist, die jeweils eine der Nasen 11, 11', 11", 11'" umgreifen. Die Schieberiegel 13, 13' können in Längserstreckung der Schweißnahtausnehmung 3 in Langlöchern 14 verschoben werden und mit jeweils einem Feststellmechanismus 15, 15' in einer offenen oder einer geschlossenen Position fixiert werden.

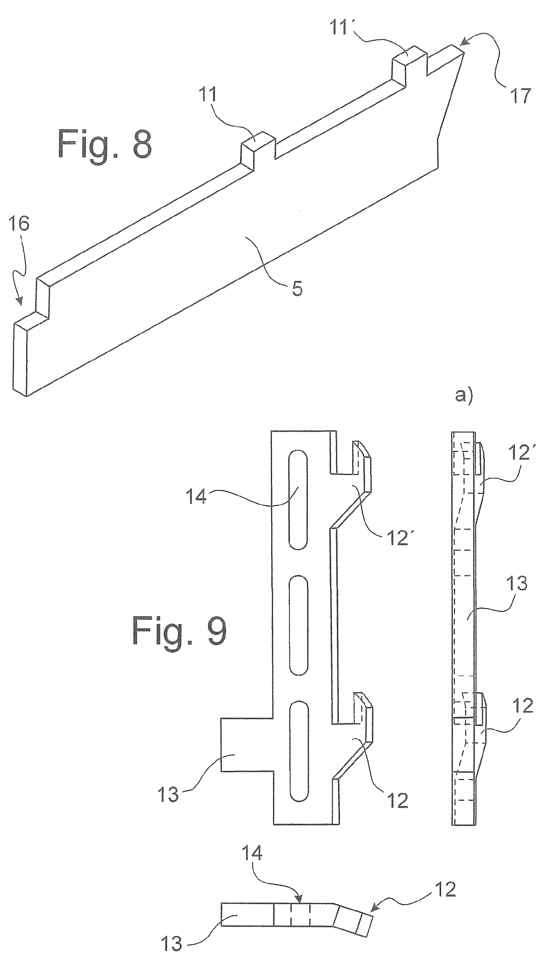

Einzeldarstellungen eines Flankenblechs 5 und eines Schieberiegels 13 gemäß der Ausführung in Fig. 7 zeigt Fig. 8 bzw. Fig. 9. Das Flankenblech 5 in Fig. 8 weist dabei an der nicht zur Anlage an den Verlängerungskörper 1 bestimmten Seite eine Ausnehmung 16 auf, die mit einem Riegel 7" oder Verriegelungsstiften 7, 7' in Anlage bringbar ist. An der mit der Oberfläche des Verlängerungskörpers 1 abschließenden Längsseite sind die beiden Nasen 11, 11' ausgebildet, welche mit Haken 12, 12' eines Schieberiegels 13 in Eingriff bringbar sind. Weiterhin ist an der zur Anlage an die Bauteile 10, 10' bestimmten Seite eine Anschrägung 17 vorgesehen, welche eine optimale Anlage des Flankenblechs 5 an beispielsweise angepasste Bauteile 10, 10' ermöglicht. Aus den Drauf- und Seitenansichten des Schieberiegels 13 gemäß Fig. 9 ist zu entnehmen, dass dieser drei Langlöcher 14 zur Befestigung an den Verlängerungskörper 1 aufweist. Um das Flankenblech 5 mit den Nasen 11, 11', fixieren zu können, sind zwei Haken 12, 12' ausgebildet, die, wie insbesondere aus der Seitenansicht hervorgeht, zu dem restlichen Schieberiegel 13, der auf einer Oberfläche des Verlängerungskörpers 1 aufliegt, in einem Winkel angestellt sind. Insbesondere beträgt der Winkel 17 Grad.

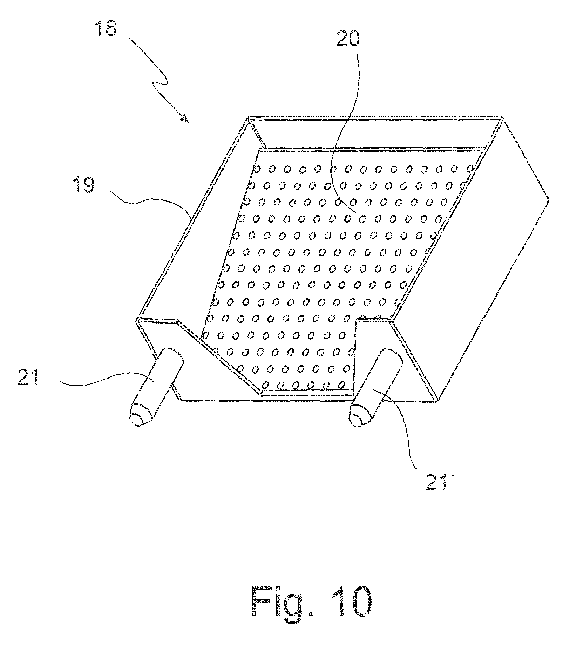

Figur 10 zeigt eine in Verlängerung der Schweißnahtausnehmung 3 an den Verlängerungskörper 1 ansetzbare Schlackeauffangeinheit 18. Diese umfasst einen Behälter 19 innerhalb dem durch ein Sieb 20 ein Schlackesammelbereich von einem Pulversammelbereich getrennt ist. Zur Befestigung der Schlackeauffangeinheit 18 an dem Verlängerungskörper 1 weist diese zwei Stifte 21, 21' auf, welche in Bohrungen des Verlängerungskörpers 1 einschiebbar sind.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Vorrichtung zum Fertigen einer Schweißnaht, die an einem Anfang oder an einem Ende über miteinander zu verbindende Bauteile hinaus verlängert ist, wobei die Vorrichtung mit einem Verlängerungskörper (1) an den Anfang oder an das Ende einer zwischen den miteinander zu verbindenden Bauteilen (10, 10') zu fertigenden Schweißnaht ansetzbar ist, die Vorrichtung mit wenigstens einem der miteinander zu verschweißenden Bauteile (10, 10') verbindbar ist, der Verlängerungskörper (1) wenigstens eine Schweißnahtausnehmung (3) aufweist, mit der der Verlängerungskörper (1) fluchtend zu der zu fertigenden Schweißnaht ausrichtbar ist, und ausgehend von wenigstens einem der Bauteile (10, 10') eine elektrisch leitende Verbindung (8, 8') zu der Schweißnahtausnehmung (3) ausgebildet ist,
**dadurch gekennzeichnet,**
**dass** der Verlängerungskörper (1) magnetisch an wenigstens eines der miteinander zu verschweißenden Bauteile (10, 10') ansetzbar ist, und
**dass** die Schweißnahtausnehmung (3) mit wenigstens einer Austauscheinlage (4) ausgekleidet ist, so dass die Vorrichtung abgesehen von der Austauscheinlage (4) wiederverwendbar ist.

2. Vorrichtung nach Anspruch 1, **dadurch gekennzeichnet, dass** an dem Verlängerungskörper (1) wenigstens ein Magnethalter (2, 2') angeordnet ist, mit dem der Verlängerungskörper (1) an wenigstens einem der zu verschweißenden Bauteile (10, 10') anordbar ist.

3. Vorrichtung nach Anspruch 2, **dadurch gekennzeichnet, dass** der Magnethalter (2, 2') schwenkbeweglich an dem Verlängerungskörper (1) befestigt ist.

4. Vorrichtung nach einem der Ansprüche 2 oder 3, **dadurch gekennzeichnet, dass** der Magnethalter (2, 2') einen Schwenkarm (2c, 2c') aufweist, der sich aus mehreren Schwenkarmteilen zusammensetzt, die drehgelenkig miteinander verbunden sind und über Feststellmittel zueinander fixierbar sind.

5. Vorrichtung nach einem der Ansprüche 2 bis 4, **dadurch gekennzeichnet, dass** der Magnethalter (2, 2') wenigstens einen abschaltbaren Magneten aufweist.

6. Vorrichtung nach einem der Ansprüche 2 bis 5, **dadurch gekennzeichnet, dass** in dem Magnethalter (2, 2') die elektrisch leitende Verbindung (8, 8') zwischen Bauteil (10, 10') und Verlängerungskörper (1) ausgebildet ist.

7. Vorrichtung nach einem der Ansprüche 1 bis 6, **dadurch gekennzeichnet, dass** der Verlängerungskörper (1) magnetisch an beiden miteinander zu verschweißenden Bauteilen (10, 10') anordbar ist.

8. Vorrichtung nach einem der Ansprüche 1 bis 5, **dadurch gekennzeichnet, dass** die elektrisch leitende Verbindung (8, 8') zwischen dem Bauteil (10, 10') und der Schweißnahtausnehmung (3) des Verlängerungskörpers (1) über wenigstens eine separate Leitung erfolgt.

9. Vorrichtung nach einem der Ansprüche 1 bis 8, **dadurch gekennzeichnet, dass** der Verlängerungskörper (1) ein Block aus Aluminium ist.

10. Vorrichtung nach einem der Ansprüche 1 bis 9, **dadurch gekennzeichnet, dass** der Verlängerungskörper (1) mehr als eine Schweißnahtausnehmung (3) aufweist.

11. Vorrichtung nach einem der Ansprüche 1 bis 10, **dadurch gekennzeichnet, dass** an der nicht zur Anlage an die zu verschweißenden Bauteile (10, 10') vorgesehenen Seite des Verlängerungskörpers (1) in Verlängerung der Schweißnahtausnehmung (3) eine Schlackeauffangeinheit (18) anordbar ist.

12. Vorrichtung nach Anspruch 11, **dadurch gekennzeichnet, dass** die Schlackeauffangeinheit (18) durch einen Behälter (19) gebildet ist, der mit einem Sieb (20) in einen Schlackesammelbereich und einen Pulversammelbereich unterteilt ist.

13. Verfahren zum Fertigen einer Schweißnaht zwischen zwei miteinander zu verbindenden Bauteilen, bei dem die Schweißnaht unter Verwendung einer Vorrichtung nach einem der Ansprüche 1 bis 12 an einem Anfang oder einem Ende oder einem Anfang und einem Ende über die miteinander zu verbindenden Bauteile hinaus verlängert wird.

14. Verfahren nach Anspruch 13, **dadurch gekennzeichnet, dass** ein Verlängerungskörper der Vorrichtung an den Anfang oder an das Ende oder jeweils ein Verlängerungskörper an den Anfang und ein Verlängerungskörper an das Ende einer zwischen miteinander zu verbindenden Bauteilen zu fertigenden Schweißnaht magnetisch angesetzt wird, die Schweißnaht bei angesetztem Verlängerungskörper oder angesetzten Verlängerungskörpern gefertigt wird und der oder die Verlängerungskörper nach Fertigung der Schweißnaht zerstörungsfrei von den miteinander verschweißten Bauteilen gelöst wird oder gelöst werden.
